# EUROPÄISCHE PATENTSCHRIFT

(11) **EP 1 704 074 B1**
(45) Veröffentlichungstag und Bekanntmachung des Hinweises auf die Patenterteilung: **30.05.2007**
(21) Anmeldenummer: 05707762.0
(22) Anmeldetag: 12.01.2005
(51) Int. Cl.: B60R 21/01, B60N 2/00, G01G 19/414

(54) **SCHALTUNGSANORDNUNG ZUR SITZBELEGUNGSERKENNUNG UND GURTWARNUNG IN EINEM KRAFTFAHRZEUG**
CIRCUIT ARRANGEMENT FOR RECOGNISING THE OCCUPANCY OF A SEAT AND SEATBELT WARNING IN A MOTOR VEHICLE
SYSTEME DE COMMANDE DESTINE A LA RECONNAISSANCE DE L'OCCUPATION D'UN SIEGE ET A L'AVERTISSEMENT DE CEINTURE D'UN VEHICULE AUTOMOBILE

(30) Priorität: 16.01.2004 DE 102004002479
(43) Veröffentlichungstag der Anmeldung: 27.09.2006
(73) Patentinhaber: SIEMENS AKTIENGESELLSCHAFT, 80333 München (DE)
(72) Erfinder: KARGES, Peter, 3 chome, Naka-ku, 231-0842 Yokohama City (DE); MELZL, Hubert, 93080 Pentling (DE); WILD, Gerhard, 93055 Regensburg (DE); KREMPL, Michael, 84061 Ergoldsbach (DE)
(86) Internationale Anmeldenummer: PCT/EP2005/050113
(87) Internationale Veröffentlichungsnummer: WO 2005/068264

(56) Entgegenhaltungen:
- DE-A1- 10 143 326
- US-A1- 2001 040 056
- US-A1- 2002 021 136

## Beschreibung

Die Erfindung betrifft eine Schaltungsanordnung zur Sitzbelegungserkennung und Gurtwarnung in einem Kraftfahrzeug. Auf einem Kraftfahrzeugsitz sind dabei Widerstandselemente flächig verteilt angeordnet, die bei Einwirken einer Normalkraft, beispielsweise durch eine Gewichtskraft senkrecht auf die Fahrzeugsitzoberfläche, und/oder eine Biegung ihren Widerstandswert verändern. Die in diesem Sinne gewichtsempfindlichen (und biegungsempfindlichen) Widerstandselemente umfassen zum einen sogenannte erste Widerstandselemente zur Sitzbelegungserkennung, die innerhalb eines ersten Messkreises zwischen einem ersten Messanschluss und einem zweiten Messanschluss, jeweils parallel zueinander geschaltet sind, und sogenannte weitere Widerstandselemente zur Gurtwarnung: Über die weiteren Widerstandselemente wird erkannt, ob sich eine Person auf dem Fahrzeugsitz befindet oder ein Gegenstand und eine Warnung ausgegeben, wenn sich eine erkannte Person au-ßerdem keinen Sicherheitsgurt angelegt hat.

Die Verwendung von gewichtsempfindlichen Widerstandselementen zur Sitzbelegungserkennung in Kraftfahrzeugen ist aus der Automobiltechnik hinlänglich bekannt. Beispielsweise wird mit Hilfe von Sensorsitzmatten, bestehend aus gewichtsempfindlichen (und biegungsempfindlichen im obigen Sinn) Widerstandselementen, auf der Sitzoberfläche eines Kraftfahrzeugsitzes die normalkraftabhängige (biegungsabhängige) Änderung der Widerstandswerte der Widerstandselemente als Sitzbelegungsinformation verwendet. Aufgrund dieser Information wird ggf. die Auslösung eines Insassenrückhaltemittels angepasst, beispielsweise wird ein Front- oder Seitenairbags an- oder abgeschaltet.

Solche Anordnungen von Widerständen als Sensorsitzmatte sind bekannt aus dem deutschen Gebrauchsmuster DE 200 14 200 U1 und aus dem Artikel "Occupant Classification System for Smart Restraint System", Society of Automotive Engineers Inc. von 1999, BNSDOCID XP-002184965. Geeignete gewichtsempfindliche Widerstandelemente als Sensorelemente von Sensorsitzmatten sind beispielsweise aus der europäischen Patentschrift 0 758 741 B1 bekannt.

Die DE 101 43 326 A zeigt eine Schaltungsanordnung gemäß dem Oberbegriff des Anspruchs 1. Es handelt sich um mehrere U-förmige, ineinander angeordnete Reihen von Sensoren. Die Sensoren sind in jeder Reihe parallel zueinander angeordnet.

Es ist bekannt, parallel zu den bislang verwendeten veränderlichen Widerstandselementen einer Sensorsitzmatte zur Sitzbelegungserkennung zwei in Serie geschaltete weitere Widerstandselemente, die beispielsweise strukturell gleich aufgebaut sein können wie die übrigen Widerstandselemente, so anzuordnen, dass eine sicherere Unterscheidung eines schweren Gegenstands von einem Fahrzeuginsassen ermöglicht wird. Beispielsweise kann es sinnvoll sein, jedes der beiden weiteren Widerstandselemente an einer Stelle auf der Sitzfläche des Fahrzeugsitzes anzubringen, auf der üblicherweise die beiden Beckenknochen eines Fahrzeuginsassen zu liegen kommen. Ist dies der Fall, so erniedrigt sich der Widerstandswert der beiden weiteren gewichtsempfindlichen Widertandselemente. Gilt dadurch eine Person als erkannt wird eine Warnmeldung an den Fahrgast oder zumindest den Fahrer ausgegeben, falls gleichzeitig der zum Fahrzeugsitz mit erkannter Person zugehörige Sicherheitsgurt nicht angelegt wurde. Eine entsprechende Gurtwarnung kann beispielsweise durch einen Signalton oder auch durch eine entsprechende Warnlampe in der Fahrzeugarmatur erfolgen.

Eine Unterscheidung von erniedrigten Widerstandswerten der Widerstandselemente zur Gurtwarnung von einer Veränderung der Widerstandswerte der Widerstandselemente zur Sitzbelegungserkennung wird dadurch erreicht, dass die Widerstandswertebereiche der beiden Widerstandselementarten verschieden sind.

Die beschriebene Anordnung besitzt deshalb den Nachteil, dass die beiden weiteren Widerstandselemente zur Sicherheitsgurtwarnung und die übrigen Sitzbelegungserkennungs-Widerstandselemente unterschiedlich aufgebaut sein müssen, damit sie einen unterschiedlichen Messbereich besitzen. Dazu ist bei ihrer Herstellung u. U. ein zusätzlicher Arbeitsaufwand notwendig.

Außerdem soll in dem bekannten System zusätzlich auch erkannt werden, ob eine Unterbrechung einer Zuleitung zu einer der Sitzmattenwiderstandselemente vorliegt. Dies wird durch Parallelschalten eines Diagnosewiderstands oder einer Diagnose-Diode zu den gewichtsempfindlichen Widerstandselementen der Sensorsitzmatte erreicht. Doch das Messergebnis für den Widerstandswert der Diagnose-Diode oder des Diagnose-Widerstands wird durch die gewichtsempfindlichen Sicherheitsgurtwarn-Widerstandselemente und die Widerstandselemente zur Sitzbelegungserkennung stark beeinflusst. Deshalb müssen sich auch die Messbereiche des Diagnose-Widerstands oder der Diagnose-Diode von den Messbereichen der gewichtsempfindlichen Widerstandselemente unterscheiden.

Aufgabe der vorliegenden Vorrichtung ist, bei einer Widerstandsmatte zur Sitzbelegungserkennung die Widerstandsmessung an den Sicherheitsgurtwarn-Widerstandselementen unabhängig von der entsprechenden Messung an den Widerstandselementen zur Sitzbelegungserkennung ausführen zu können und eine Unterbruchserkennung der Zuleitungen zu ermöglichen, die nicht gleichzeitig sowohl von den Sicherheitsgurtwarn-Widertandselementen als auch den Widerstandselementen zur Sitzbelegungserkennung beeinflusst wird.

Diese Aufgabe wird gelöst durch eine Schaltungsanordnung gemäß Anspruch 1.

Die erfindungsgemäße Schaltungsanordnung zur Sitzbelegungserkennung und Gurtwarnung in einem Kraftfahrzeug weist gewichtsempfindliche und üblicherweise auch biegungsempfindliche erste Widerstandselemente auf, die zur Sitzbelegungserkennung für ein Insassenschutzsystem dienen, und weitere Widerstandselemente, deren Signale beispielsweise ggf. Anlass für einen Warnhinweis an den Fahrzeuginsassen über einen nicht angelegten Sicherheitsgurt sind. Die ersten Widerstandselemente sind innerhalb eines ersten Messkreises zwischen einen ersten Messanschluss und einen zweiten Messanschluss, jeweils parallel zueinander geschaltet. Erfindungsgemäß ist ein erstes weiteres Widerstandselement in einem zweiten Messkreis zwischen den ersten Messanschluss und einen dritten Messanschluss geschaltet und ein zweites weiteres Widerstandselement in einem dritten Messkreis zwischen den zweiten Messanschluss und einen vierten Messanschluss. Dadurch werden bei einer Widerstandsmessung des ersten weiteren Widerstandselements über den ersten und den dritten Messanschluss und bei einer Widerstandsmessung des zweiten weiteren Widerstandselements über den zweiten und den vierten Messanschluss der Schaltungsanordnung jeweils die ersten Widerstandselemente der Sensorsitzmatte elektrisch überbrückt, so dass zum Messzeitpunkt eine momentan auf die ersten Widerstandselemente einwirkende Kraft nicht zu einer Verfälschung des jeweiligen Messergebnisses für die weiteren Widerstandselemente führen kann.

Weitere Ausführungsbeispiele für eine erfindungsgemäße Schaltungsanordnung sind in den Unteransprüchen angegeben.

Beispielsweise ist es vorteilhaft, dass alle Widerstandselemente, d.h. sowohl die ersten Widerstandselemente als auch die weiteren Widerstandselemente, als Sensorelemente auf einer Sensorsitzmatte zur Sitzbelegung in einem Kraftfahrzeug angeordnet sind. Besonders vorteilhaft ist es dabei, wenn die ersten Widerstandselemente und die weiteren Widerstandselemente den gleichen strukturellen Aufbau besitzen, da sie so auf sehr einfache Weise innerhalb der gleichen Herstellungsprozesse gefertigt werden können.

Es ist weiterhin vorteilhaft, parallel zu dem ersten weiteren Widerstandselement einen ersten Diagnose-Widerstand anzuordnen und ggf. zusätzlich parallel zu dem zweiten weiteren Widerstandselement einen zweiten Diagnose-Widerstand. Dadurch, dass der zweite Messkreis und der dritte Messkreis die ersten Widerstandselementen elektrisch überbrücken, haben die veränderlichen Widerstandswerte der ersten Widerstandselemente auch keinen Einfluss auf eine Messung der beiden Diagnose-Widerstände. Es muss deshalb in der Herstellung lediglich darauf geachtet werden, den Messbereich der parallel anliegenden weiteren Widerstandselemente zur Sicherheitsgurtwarnung ausreichend weit und damit unterscheidbar von den Widerstandswerten der beiden Diagnose-Widerstände auszulegen.

Alternativ kann ein Diagnose-Widerstand auch parallel zu den ersten Widerstandselementen der Sensorsitzmatte zur Sitzbelegungserkennung angeordnet werden, so dass sein Widerstandswert ohne Einfluss der beiden weiteren Widerstandselemente zur Sicherheitsgurtwarnung ist und lediglich weit genug und somit unterscheidbar von dem Wertebereich des Gesamtwiderstands der parallel angeordneten ersten Widerstandselemente.

Es ist weiterhin vorteilhaft, die Widerstandselemente zur Sitzbelegungserkennung in sogenannter "Through-Mode"-Technologie herzustellen:

Eine Sensorsitzmatte besteht üblicherweise aus einer ersten und zweiten Trägerfolie, die durch Abstandshalter voneinander auf Abstand gehalten werden. An den Orten der Sensorelemente sind gegenüberliegend voneinander eine erste Leiterstruktur auf der ersten Trägerfolie aufgebracht und eine zweite Leiterstruktur auf der zweiten Trägerfolie, wobei beide Leiterstrukturen jeweils erste und zweite elektrische Anschlüsse aufweisen. Unter Einwirken einer Normalkraft oder einer Biegung auf die Trägerfolien nähern sich die beiden Leiterstrukturen einander an und bilden schließlich durch Berühren eine Kontaktfläche mit veränderlichem Durchgangswiderstand, je nach Größe der einwirkenden Kraft oder der Größe und Art der Biegung. "Through-Mode"-Technologie bezeichnet nun, dass ein gewichtsabhängiges Widerstandselement, ein Sensorelement, durch den leitenden Abschnitt zwischen dem ersten elektrischen Anschluss der ersten Leiterstruktur über bei Gewichtsbelastung leitende Kontaktfläche der beiden Leiterstrukturen hin zum zweiten Anschluss der zweiten Leiterstruktur gebildet wird. Die "Through-Mode"-Technologie bietet die Möglichkeit, die Zuleitungen zu den gewichtsabhängigen Widerstandselementen auf der einen Trägerfolie anzuordnen und die Rückleitungen der Widerstandselemente auf der jeweils gegenüberliegenden Trägerfolie. Im Vergleich zur anderen Technologien erlaubt deshalb die "Through-Mode"-Technologie eine weitaus größere entwicklerische Freiheit, Widerstandselemente auf einer Sensorsitzmatte zu verteilen, ohne aus Platzgründen zu nah zusammenliegende Zuleitungen auf der Sensorsitzmatte vorsehen zu müssen oder gar Überkreuzungen von Zuleitungen, was die mechanische Robustheit der Sensorsitzmatte verringern könnte und die Signale der Widerstandselemente anfälliger gegen elektromagnetische Störeinflüsse machen würde.

Da die beiden Gurtwarn-Widerstandselemente üblicherweise nahe den Rändern der Sensorsitzmatte platziert sind, wie oben beschrieben üblicherweise an den Auflageorten für die Beckenknochen eines Fahrzeuginsassen, sind sie Anzahl und die Länge ihrer Zuleitungen meist vergleichsweise gering, so dass die Gurtwarn-Widerstandselemente auch in der herkömmlicheren "Shunt-Mode"-Technologie aufgebaut sein können: Ein gewichtsabhängiges Widerstandselement, ein Sensorelement, wird dabei beispielsweise durch den leitenden Abschnitt zwischen einem ersten elektrischen Anschluss einer ersten Leiterstruktur des Widerstandselements auf der ersten Trägerfolie über eine unter Gewichtsbelastung leitende Kontaktfläche auf der zweiten Trägerfolie hin zu einem zweiten Anschluss einer zweiten Leiterstruktur des Widerstandelements gebildet, die jedoch wieder auf der ersten Trägerfolie angeordnet ist. Die Kontaktfläche auf der zweiten Trägerfolie dient folglich dem Widerstandelement unter Druck- und/oder Biegebelastung lediglich als Überbrückungswiderstand, als Shunt-Widerstand.

Nachfolgend wird die Erfindung anhand eines Ausführungsbeispiels und anhand von mehreren Figuren erläutert. Es zeigen:
- Figur 1: eine erfindungsgemäße Schaltungsanordnung,
- Figur 2: eine bekannte Schaltungsanordnung;
- Figur 3: einen Kraftfahrzeugsitz 2 mit einer Sensorsitzmatte PPD mit ersten Widerstandselementen (R1, R2, R3, ...) und weitere gewichtsabhängige Widerstandselemente R_SBR_1, R_SBR_2,
- Figur 4: ein Widerstandelement R1 zur Sitzbelegungserkennung in "Through-Mode"-Technologie,
- Figur 5: das Widerstandelement R1 zur Sitzbelegungserkennung gemäß Figur 4 im Querschnitt,
- Figur 6: ein Widerstandelement R_SBR1 zur Gurtwarnung in "Shunt-Mode"-Technologie und
- Figur 7: das Widerstandelement R_SBR1 zur Gurtwarnung gemäß Figur 6 im Querschnitt.

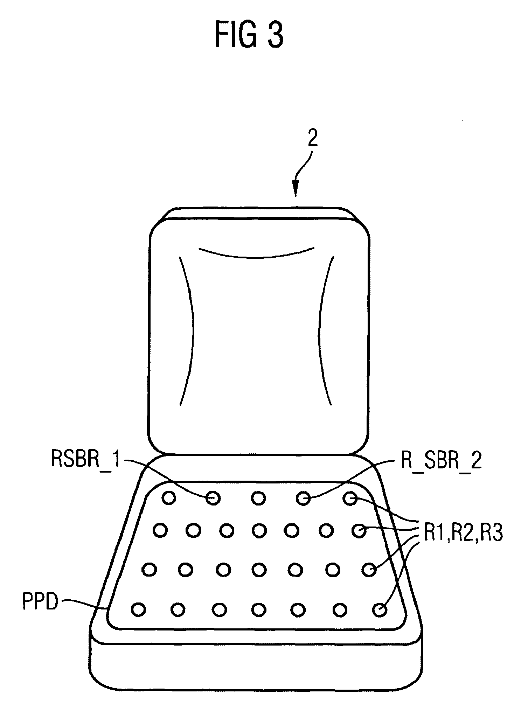

Figur 3 zeigt einen Kraftfahrzeugsitz 3, auf dessen Sitzfläche eine Sensorsitzmatte PPD angeordnet ist. Die Sensorsitzmatte weist erste Widerstandselemente R1, R2, R3,.. mit gewichtsabhängig variablen Widerstandswerten, die als Sensorelemente 1 zur Sitzbelegungserkennung in einem Kraftfahrzeug dienen. Die Sensorsitzmatte PPD weist außerdem zwei weitere Widerstandswerte R_SBR_1 und R_SBR_2 mit ebenfalls gewichtsabhängig variablen Widerstandwerten auf. Diese beiden weiteren Widerstandselemente R_SBR_1 und R_SBR_2 sind an Stellen des Kraftfahrzeugsitzes 2 angeordnet, an denen üblicherweise die beiden Beckenknochen eines Fahrzeuginsassen zu liegen kommen. Dadurch wird eine hohe Kraft auf diese beiden weiteren Widerstandselemente R_SBR_1 und R_SBR_2 durch eine Person auf dem Kraftfahrzeugsitz ausgeübt, während diese Belastung durch einen Gegenstand üblicherweise nicht hervorgerufen wird. Diese Unterscheidung zwischen einer Person und einem Gegenstand wird durch eine Steuereinheit des Kraftfahrzeugs dazu verwendet, um bei einem durch eine Person besetzten Kraftfahrzeugsitz einen Warnhinweis auszugeben, wenn die auf dem Fahrzeugsitz festgestellte Person gleichzeitig ihren Sicherheitsgurt nicht angelegt hat.

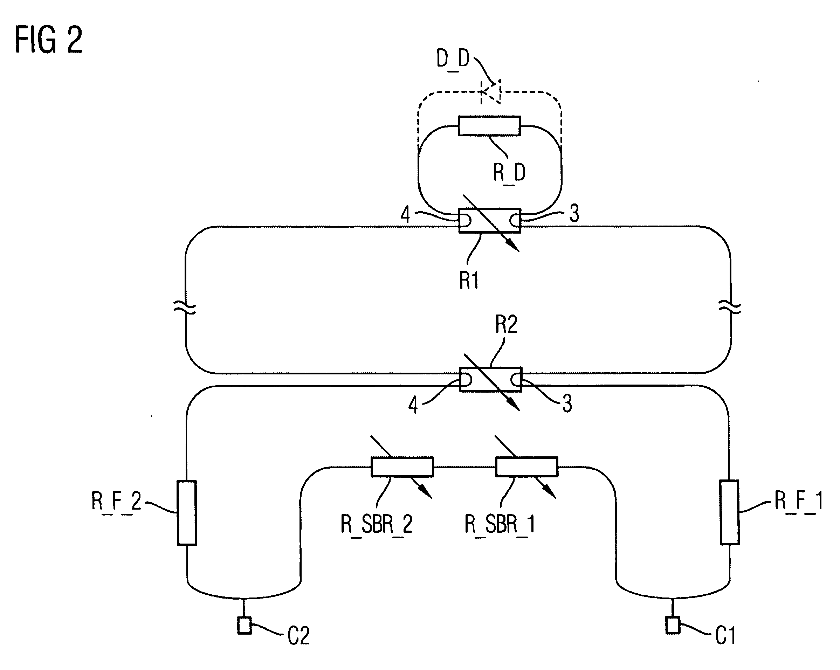

Figur 2 zeigt zwei erste und zwei weitere Widerstandselemente R1, R2, R_SBR_1, R_SBR_2 der Sensorsitzmatte PPD aus der Figur 3 in einer bekannten Schaltungsanordnung. Die zwei dargestellten ersten Widerstandselemente R1 und R2 sind dabei nur exemplarisch für eine Vielzahl von ersten Widerstandselementen einer Sensorsitzmatte PPD dargestellt, was durch die unterbrochene Verbindungsleitung zu den ersten und zweiten elektrischen Anschlüssen 3, 4 der beiden Widerstandselemente R1, R2 angedeutet ist.

Die beiden Widerstandselemente R1, R2 sind mit ihrem jeweiligen ersten elektrischen Anschluss 3 über einen Festwiderstand R_F_1 mit einem ersten Messanschluss C1 verbunden sowie mit ihren jeweils zweiten Anschlüssen 4 über einen zweiten Festwiderstand R_F_2 mit einem zweiten Messanschluss C2. Außerdem sind zwischen diese beiden Messanschlüsse C1 und C4 die beiden weiteren Widerstandselemente R_SBR_1 und R_SBR_2 seriell hintereinander geschaltet.

Über die beiden Messanschlüsse C1 und C2 wird mit Hilfe einer nicht dargestellten Messschaltung ein Widerstand gemessen, der maßgeblich durch die ersten Widerstandselemente R1 und R2 und die beiden weiteren Widerstandselemente R_SBR_1 und R_SBR_2 bestimmt wird.

Im unbelegten Zustand weisen die ersten Widerstandselemente R1 und R2 einen Widerstandswert im Bereich von MΩ auf. Sobald ein ausreichend hohes Gewicht auf die Sensorelemente R1 und R2 einwirkt, liegt ihr Widerstandswert zwischen 40 und 60 kΩ pro Sensorelement R1, R2. Im vorliegenden Fall der Figur 2 liegt der Gesamtwiderstandswert der beiden Sensorelemente R1 und R2 bei ca. 25 kΩ. Die beiden weiteren Widerstandselemente R_SBR_1 und R_SBR_2 weisen im gedrückten Zustand einen gemeinsamen Widerstandswert zwischen 0,5 kΩ und 1,5 kΩ auf. Befindet sich nun eine Person auf dem Kraftfahrzeugsitz sind sowohl die ersten Widerstandselemente R1, R2 belastet als auch die weiteren Widerstandselemente R_SBR_1 und R_SBR_2. Der über die beiden Messanschlüsse C1 und C2 messbare Gesamtwiderstand dieser Widerstandsanordnung unterscheidet sich dabei eindeutig von einer Situation, bei der beispielsweise nur die ersten Widerstandselemente R1, R2 mit Gewicht belastet würden. Dies lässt auf die Anwesenheit einer Person auf dem Fahrzeugsitz schließen.

Damit bei unbelasteten oder nur wenig belasteten weiteren Widerstandselementen R_SBR_1 und R_SBR_2 der Gesamtwiderstand zwischen C1 und C2 nicht unter einen Mindestwiderstandswert fallen kann, ist in der Zuleitung zwischen dem ersten Messanschluss C1 und den ersten Anschlüssen 3 der ersten Widerstandselemente R1 und R2 ein erster Festwiderstand R_F_1 und zwischen den zweiten Messanschluss C2 und den zweiten elektrischen Anschluss 4 der ersten Widerstandselemente R1 und R2 ein zweiter Festwiderstand R_F_2 angeordnet, die jeweils einen festen Widerstandswert von ca. 20 kΩ aufweisen.

Liegt bei unbelasteten weiteren Widerstandselementen R_SBR_1 und R_SBR_2 ein Leitungsbruch zwischen dem ersten Messanschluss C1 und den ersten Widerstandselementen R1 und R2 vor oder, ggf. zusätzlich, zwischen dem zweiten Messanschluss C2 und den beiden ersten Widerstandselementen R1 und R2, so ist zwischen dem ersten Messanschluss C1 und dem vierten Messanschluss C4 ein Widerstandswert von mehreren MΩ oder höher zu messen. Um eine solche Leitungsunterbrechung eindeutig von einer völlig unbelasteten Sensormatte unterscheiden zu können, ist parallel zu den ersten Widerstandselementen R1 und R2 entweder ein Diagnose-Widerstand R_D oder eine Diagnose-Diode D_D geschaltet. Ein Diagnose-Widerstand R_D und eine Diagnose-Diode D_D sind alternativ verwendbar, was durch die gestrichelt eingezeichnete Diagnose-Diode D_D in der Figur 2 zwischen den beiden Messanschlüssen C1 und C4 angedeutet ist.

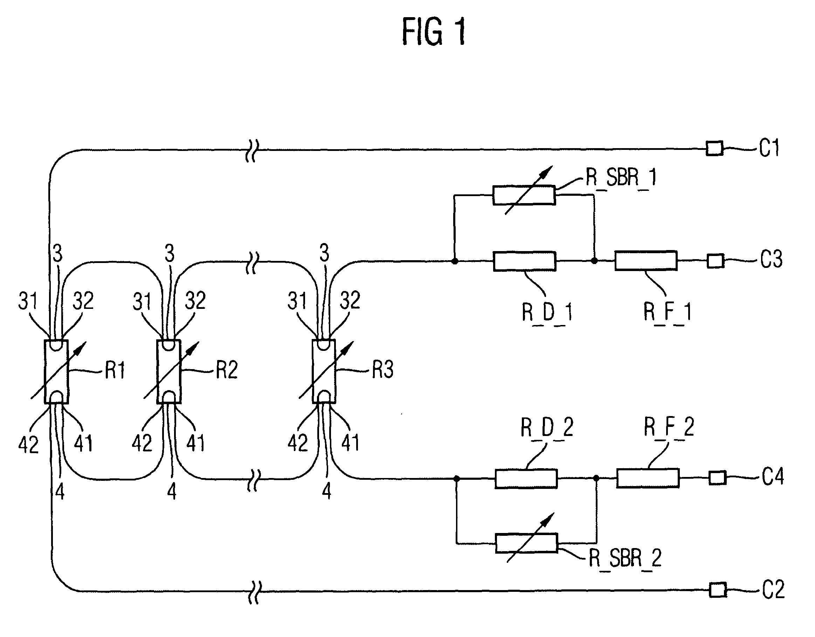

Figur 1 zeigt ein Ausführungsbeispiel für eine erfindungsgemäße Schaltungsanordnung. Dargestellt sind drei parallel geschaltete erste Widerstandselemente R1, R2 und R3, die mit ihren jeweiligen ersten Anschlüssen 3 sowohl mit dem ersten Messanschluss C1 als auch - über einen ersten Diagnose-Widerstand R_D_1 und einen danach in Serie geschalteten ersten Festwiderstand R_F_1 - mit einem dritten Messanschluss C3 verbunden sind. An ihren jeweiligen zweiten Anschlüssen 4 sind die parallel geschalteten ersten Widerstandselemente R1, R2 und R3 sowohl mit dem zweiten Messanschluss C2 als auch über einen zweiten Diagnose-Widerstand R_D_2 und einen danach in Serie geschalteten zweiten Festwiderstand R_F_2 mit dem vierten Messanschluss C4 verbunden. Parallel zu dem ersten Diagnose-Widerstand R_D_1 ist ein erstes weiteres Widerstandselement R_SBR_1 geschaltet, parallel zum zweiten Diagnose-Widerstand R_D_2 ist ein zweites weiteres Widerstandselement R_SBR_2 geschaltet.

Zwischen die Verbindungsleitungen zwischen den ersten Anschlüssen 3 der ersten Widerstandselemente R2 und R3 sind jeweils zwei Unterbrechungslinien eingezeichnet, ebenso zwischen die Verbindungsleitungen zwischen den zweiten Anschlüssen 4 der beiden ersten Widerstandselemente R2 und R3. Dies deutet an, wie schon in der bekannten Ausführungsform aus Figur 2 angedeutet, dass üblicherweise wesentlich mehr erste Widerstandselemente parallel zu den dargestellten drei Widerstandselementen R2, R3 geschaltet sind. Die Unterbrechungslinien zwischen den ersten Widerstandselementen R1, R2 und R3 und dem ersten Messanschluss C1 und dem zweiten Messanschluss C2 deuten darauf hin, dass die Zuleitungen unter Umständen sehr lange sein können.

Mit der in Figur 1 dargestellten Schaltungsanordnung erfolgt eine Messung des Widerstands zwischen den beiden Messanschlüssen C1 und C3, die den Gesamtwiderstandswert des weiteren Widerstandselements R_SBR_1, des Diagnose-Widerstands R_D_1 und des Festwiderstands R_F_1 nebst Zuleitungswiderständen darstellt. Der Festwiderstand R_F_1 ist optional und wie in der Figur 2 zur Festlegung eines untersten Messwertes in die Schaltungsanordnung eingebracht. Der Diagnose-Widerstand R_D_1 dient zur Unterbruchserkennung soll durch einen entsprechend unterschiedlich ausgelegten Messbreich von einem gedrückten Gurtwarn-Widerstandelement S_SBR1 unterscheidbar sein. Deshalb liegt sein Widerstandswert hier zwischen 2 und 200 kΩ. Verringert sich der Gesamtwiderstand der Parallelschaltung der beiden Widerstände R_SBR_1 und R_D_1 durch Ausüben einer Druckkraft auf das Widerstandselement R_SBR_1, so wird diese Veränderung anhand einer Veränderung des gesamten Messwiderstands zwischen beiden Messanschlüssen C1 und C3 festgestellt.

Analog zur Gesamtwiderstandsmessung zwischen den Messanschlüssen C1 und C3 wird auch der Gesamtwiderstand zwischen den Messanschlüssen C4 und C2 bestimmt. Im Vergleich zu der Masche zwischen den Messanschlüssen C1 und C3 sind in der Masche zwischen den Messanschlüssen C2 und C4 die Widerstände R_SBR_2, R_D_2 und R_F_2 analog zu den entsprechenden Widerständen R_SBR_1, R_D_1 und R_F_1 angeordnet. Die Widerstandsmessung in der zweiten Masche erfolgt analog zur Widerstandsmessung in der ersten Masche und soll daher nicht näher erläutert werden.

Im Vergleich zur Schaltungsanordnung der Figur 2 ist eine Messung sowohl des ersten als auch des zweiten weiteren Widerstandselementes R_SBR_1 und R_SBR_2 möglich, bei der die ersten Widerstandselemente R1, R2 und R3 im Idealfall keinen Einfluss auf die Messung nehmen. Dadurch können die beiden Widerstandselemente R_SBR_1 und R_SBR_2 den gleichen Messbereich und folglich in völlig gleicher Weise wie die ersten Widerstandselemente R1, R2 und R3 hergestellt werden. Dadurch kann die Herstellung einer Sensorsitzmatte zur Sitzbelegungserkennung mit einer Schaltungsanordnung gemäß der Figur 1 wesentlich günstiger als mit einer Schaltungsanordnung gemäß Figur 2 erfolgen.

Desweiteren ist es möglich, das erste weitere Widerstandselement R_SBR_1 und das zweite weitere Widerstandselement R_SBR_2 jeweils unabhängig voneinander zu vermessen. Dies bietet den Vorteil, dass auch eine ungewollte Messwertverschiebung bei nur einer der beiden weiteren Widerstandselemente R_SBR_1 oder R_SBR_2 festgestellt werden kann und so ein Fehler in der Schaltungsanordnung wesentlich schneller und gezielter erkannt und in der Folge abgestellt werden kann.

Die Schaltungsanordnung der Figur 1 besitzt den weiteren Vorteil, dass eine Unterbrechung der Leitungen der ersten Masche zwischen C1 und C3 einerseits und der zweiten Masche zwischen C4 und C2 andererseits auch ohne ein Diagnose-Widerstandselement R_D oder eine Diagnose-Diode D_D ausgeführt werden kann: Eine Messung der Widerstände der ersten Widerstandselemente R1, R2 und R3 über die beiden Messanschlüsse C1 und C2 wird also nicht über einen zusätzlichen Widerstandswert beeinflusst wie im Falle der Schaltungsanordnung gemäß Figur 2.

Eine Diagnose-Diode D_D wird beispielsweise in einer Schaltungsanordnung gemäß Figur 2 vor allem dann anstatt eines Diagnose-Widerstandes R_D eingesetzt wird, wenn über eine Widerstandsmessung bei der dortigen Schaltungsanordnung zwischen den beiden Messanschlüssen C1 und C4 anhand der Stromrichtung zwischen einer Messung mit und ohne Diagnose-Bauelement D_D unterschieden werden soll. Ein solcher Schaltungs- und Messaufwand ist bei der Schaltungsanordnung gemäß Figur 1 nicht mehr nötig. Außerdem kann in der Schaltungsanordnung der Figur 1 durch Vertauschen der Stromrichtungen bei Messungen der ersten Widerstandselemente R1, R2 und R3 eine plausibilisierende Zweitmessung erfolgen, die das gleiche Messergebnis erbringen sollte wie die Erstmessung. Dies kann als Sicherheit für die erste Messung dienen.

Ein weiterer Vorteil von unabhängig voneinander messbaren ersten Widerstandselementen R1, R2, R3 und weiteren Widerstandselemente R_SBR_1 und R_SBR_2 besteht darin, dass die Messbereiche der beiden Widerstandselemente nicht mehr voneinander getrennt werden müssen, um am Messergebnis unterscheiden zu können, ob mindestens eines der ersten Widerstandselemente R1, R2, R3 gedrückt ist oder ggf. zusätzlich eines der beiden weiteren Widerstandselemente R_SBR_1 oder R_SBR_2. Der Messbereich für die ersten Widerstandselemente R1, R2, R3 kann somit größer ausgelegt werden.

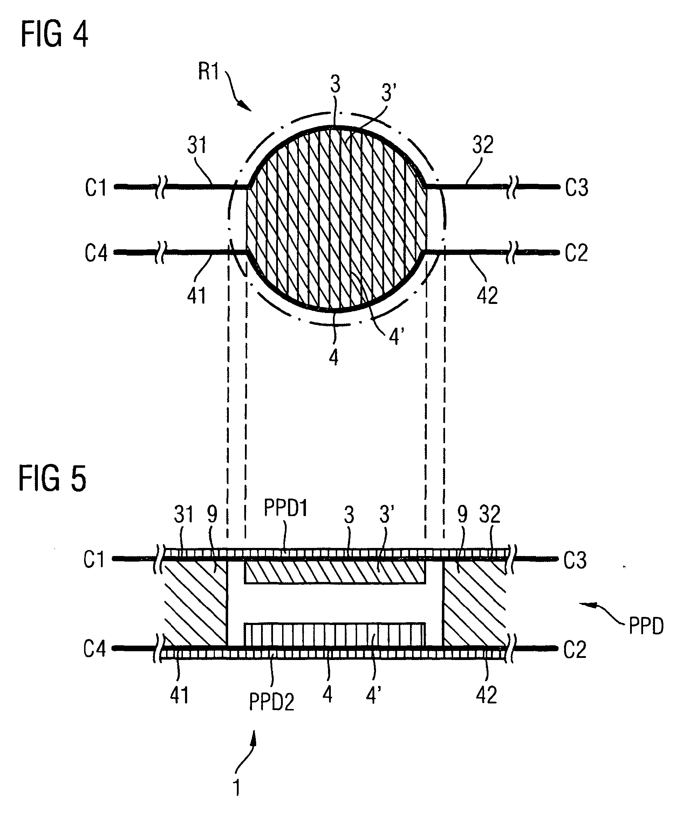

Figur 4 zeigt ein bevorzugtes Widerstandselement R1 zur Sitzbelegungserkennung, exemplarisch für alle Widerstandselemente R1, R2, R3, mit Leiterbahnen 3 und 4 zwischen jeweils beidseitigen Anschlüssen 31 und 32 bzw. 41 und 42, welche jeweils dem ersten Messanschluss C1 und dem dritten Messanschluss C3 bzw. dem vierten Messanschluss C4 und dem zweiten Messanschluss C2 zugeführt sind.

Die erste Leiterbahn 3 bildet in der gezeigten schematischen Darstellung einen zum oberen Seitenende hin gewölbten ersten Kreisbogen, die untere Leiterbahn 4 einen entsprechend nach dem unteren Seitenende hin gewölbten zweiten Kreisbogen. Die erste Leiterbahn 3 ist auf einer ersten Trägerfolie PPD1, die zweite Leiterbahn 4 ist auf einer zweiten Trägerfolie PPD2 angeordnet, was anhand der Querschnittsdarstellung des Widerstandelements R1 in der Figur 5 weiter unten ausführlicher erläutert wird.

Die von den beiden Kreissegmenten eingeschlossene, schräg zur Schriftrichtung schraffierte Fläche 3' stellt schematisch eine unter der ersten Leiterbahn 3 angeordnete Halb-/Leiterschicht 3' dar, die senkrecht zur Schriftrichtung schraffierte Fläche 4' eine oberhalb der zweiten Leiterbahn 4 angeordnete Halb-/Leiterschicht 4', so dass die beiden Halb-/Leiterschichten 3' und 4' einander zugewandt angeordnet sind. Bei den Halb-/Leiterschichten 3' und 4' handelt es sich beispielsweise um Graphitschichten 3' und 4'.

Im Unterschied zu der schematischen Darstellung der Figur 4 füllen bei einer realen Ausführungsform eines ersten Widerstandelements R1 die erste und die zweite Leiterbahn 3 und 4 die jeweils zu den dargestellten Kreisbögen gehörigen Kreisflächen vollständig aus, was jedoch eine übersichtliche Darstellung erschweren würde.

Figur 5 zeigt das Widerstandelement R1 der Figur 4 im Querschnitt durch die Sensorsitzmatte PPD. Die erste Leiterbahn 3 ist auf der ersten Trägerfolie PPD1 angeordnet, die zweite Leiterbahn 4 ist auf der zweiten Trägerfolie PPD2 angeordnet. Die Trägerfolien PPD1 und PPD2 werden durch sogenannte Spacer 9 auf Abstand voneinander gehalten. Zwischen den Graphitschichten 3' und 4' ist anstatt des Spacers 9 ein Hohlraum angeordnet.

Durch beidseitigen Druck auf das Widerstandelement R1 in Richtung des Hohlraums verformt sich das Widerstandselement R1 und der Hohlraum wird kleiner, bis sich die an der ersten Leiterbahn 3 und die an der zweiten Leiterbahn 4 befestigten Graphitschichten 3`, 4` berühren. Bei weiterer Erhöhung des Drucks nimmt der Widerstandswert des Widerstandelements R1 zwischen den eingezeichneten Anschlüssen 31 und 34 der ersten bzw. zweiten Leiterbahn 3, 4 immer weiter ab.

Von dem Anschluss 31 wird eine Leitung auf der ersten Trägerfolie PPD1 zum ersten Messanschluss C1 geführt und von dem Anschluss 42 wird eine Leitung entlang der zweiten Trägerfolie PPD2 bis hin zum zweiten Messanschluss C2 geführt: bei dem Widerstandelement R1 handelt es sich um ein Widerstandelement in "Through-Mode"-Technologie.

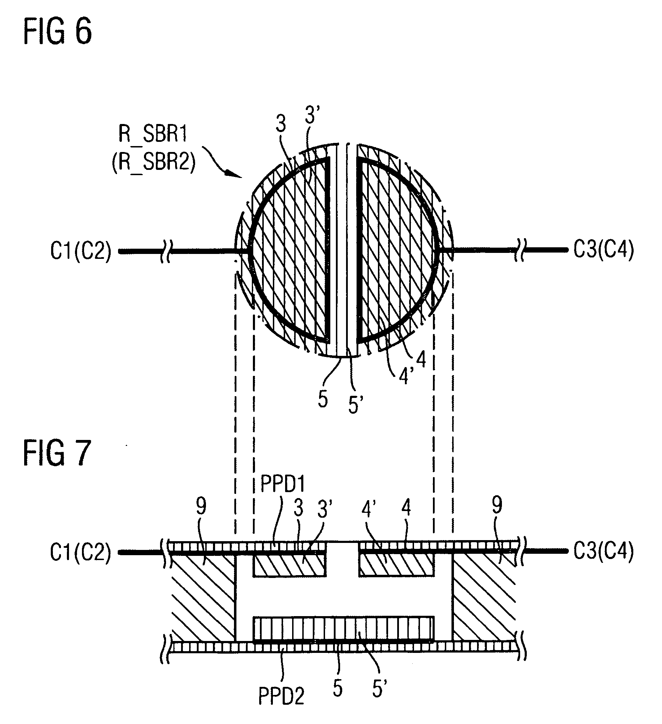

Die Figuren 6 und 7 zeigen ein Widerstandselement R_SBR1 zur Gurtwarnung.

Die Figur 6 zeigt das Widerstandselement R_SBR1 in Draufsicht. Es ist ein Widerstandselement R_SBR1 in "Shunt-Technologie":

Im Unterschied zum Widerstandselement R1 der Figur 4 sind die beiden Leiterbahnen 3 und 4 halbkreisförmig gegenüberliegend unter der ersten Trägerfolie PPD1 angeordnet. Zur erleichterten Darstellung der jeweils direkt unter den Leiterbahnen 3 und 4 liegenden, schräg zur Schriftrichtung schraffierten Graphitschichten 3' und 4' sind die Halbkreise jedoch nicht flächendeckend dargestellt wie dies bei einer realen Ausführungsform eines derartigen Widerstandselements R_SBR1 üblich wäre.

Die in der Figur 6 senkrecht schraffierte Fläche ist die den beiden Graphitschichten 3' und 4' gegenüberliegende Graphitschicht 5' auf der Leiterbahn 5, die auf der zweiten Trägerfolie PPD2 angeordnet ist.

Wie im Falle des ersten Widerstandelements R1 der Figuren 4 und 5 werden die beiden Trägerfolien PPD1 und PPD2 durch Spacer 9 auf Abstand voneinander gehalten, wodurch die Graphitschichen 3' und 4' der ersten Trägerfolie PPD1 durch einen Hohlraum von der Graphitschicht 5' auf der zweiten Trägerfolie getrennt wird. Werden die Graphitschichten 3', 4' auf die gegenüberliegende Graphitschicht 5' gedrückt, so kann Strom zwischen den Messanschlüssen C1 und C3 fließen, die mit den beiden Leiterbahnen 3 bzw. 4 verbunden sind.

Das bezüglich des ersten Widerstandselements S_BR1 in den Figuren 6 und 7 beschriebene gilt gleichermaßen auch für das zweite Widerstandelement S_BR2, wenn die in jeweils Klammern bezeichneten Messanschlüsse C2 und C4 die Stelle der bislang erläuterten Messanschlüsse treten.

## Patentansprüche

1. Schaltungsanordnung zur Sitzbelegungserkennung und Gurtwarnung in einem Kraftfahrzeug mit auf einem Kraftfahrzeugsitz (2) flächig verteilt angeordneten gewichtsempfindlichen Widerstandselementen (R1, R2, R3, R_SBR_1, R_SBR_2), wobei
- die gewichtsempfindlichen Widerstandselemente (R1, R2, R3, R_SBR_1, R_SBR_2) erste Widerstandselemente zur Sitzbelegungserkennung (R1, R2, R3) und weitere Widerstandselemente zur Gurtwarnung (R_SBR_1, R SBR 2) aufweisen und
- die ersten Widerstandselemente (R1, R2, R3), innerhalb eines ersten Messkreises zwischen einem ersten Messanschluss (C1) und einem zweiten Messanschluss (C2), jeweils parallel zueinander geschaltet sind,
**dadurch gekennzeichnet, dass** ein erstes weiteres Widerstandselement (R_SBR_1) in einem zweiten Messkreis zwischen dem ersten Messanschluss (C1) und einem dritten Messanschluss (C3) geschaltet ist und ein zweites weiteres Widerstandselement (R_SBR_2) in einem dritten Messkreis zwischen dem zweiten Messanschluss (C2) und einen vierten Messanschluss (C4) geschaltet ist.

2. Schaltungsanordnung nach Anspruch 1, **dadurch gekennzeichnet, dass** die ersten Widerstandselemente (R1, R2, R3) als Sensorelemente zur Sitzbelegungserkennung und die weiteren Widerstandelemente (R_SBR_1, R_SBR_2) als Sensorelemente zur Gurtwarnung auf einer gemeinsamen Sensorsitzmatte (PPD) zur Sitzbelegungserkennung und Gurtwarnung in einem Kraftfahrzeug angeordnet sind.

3. Schaltungsanordnung nach einem der Ansprüche 1 oder 2, **dadurch gekennzeichnet, dass** parallel zu dem ersten weiteren Widerstandselement (R_SBR_1) ein erster Diagnosewiderstand (R_D_1) und parallel zu dem zweiten weiteren Widerstandselement (R_SBR_1) ein zweiter Diagnosewiderstand (R_D_2) angeordnet ist.

4. Schaltungsanordnung nach Anspruch 2, **dadurch gekennzeichnet, dass**
- die Sensorsitzmatte (PPD) eine erste und eine zweite Trägerfolie (PPD1, PPD2) aufweist, die durch Abstandshalter (9) voneinander auf Abstand gehalten werden,
- ein Sensorelement zur Sitzbelegungserkennung (R1, R2, R3) zwei gegenüberliegende Leiterstrukturen (3, 4) aufweist, wobei eine davon an der ersten Trägerfolie (PPD1) und die zweite auf der zweiten Trägerfolie (PPD2) angeordnet ist, wobei jede Leiterstruktur (3, 4) an beiden Enden elektrische Anschlüsse (31, 32, 41, 42) aufweist und wobei die beiden Leiterstrukturen (3, 4) durch Krafteinwirkung auf die Trägerfolien (PPD1, PPD2) elektrisch kontaktierbar sind,
- der erste Anschluss (31) der ersten Leiterstruktur (3) mit dem ersten Messanschluss (C1) und der zweite Anschluss (32) der ersten Leiterstruktur (3) mit dem dritten Messanschluss (C3) verbunden ist und
- der erste Anschluss (41) der zweiten Leiterstruktur (4) mit dem vierten Messanschluss (C4) und der zweite Anschluss (42) der zweiten Leiterstruktur (4) mit dem zweiten Messanschluss (C2) verbunden ist.

## Claims

1. Circuit arrangement for recognising the occupancy of a seat and seatbelt warning in a motor vehicle having weight-sensitive resistance elements (R1, R2, R3, R_SBR_1, R_SBR_2) arranged in a separated and flat manner on a vehicle seat (2), in which
- the weight-sensitive resistance elements (R1, R2, R3, R_SBR_1, R_SBR_2) have first resistance elements for recognising the occupancy of a seat (R1, R2, R3) and additional resistance elements for seatbelt warning (R_SBR_1, R_SBR_2) and
- the first resistance elements (R1, R2, R3) are connected to one another in parallel within a first measuring circuit between a first measuring connection (C1) and a second measuring connection (C2),
**characterised in that** a first additional resistance element (R_SBR_1) is connected in a second measuring circuit between the first measuring connection (C1) and a third measuring connection (C3), and a second additional resistance element (R_SBR_2) is connected in a third measuring circuit between the second measuring connection (C2) and a fourth measuring connection (C4).

2. Circuit arrangement according to claim 1, **characterised in that** the first resistance elements (R1, R2, R3), being sensor elements for recognising seat occupancy, and the additional resistance elements (R_SBR_1, R_SBR_2), being sensor elements for seatbelt warning, are arranged on a common sensor seating mat (PPD) for recognising seat occupancy and seatbelt warning in a motor vehicle.

3. Circuit arrangement according to one of claims 1 or 2,
**characterised in that** a first diagnostic resistor (R_D_1) is arranged parallel to the first additional resistance element (R_SBR_1) and a second diagnostic resistor (R_D_2) is arranged parallel to the second additional resistance element (R_SBR_2) .

4. Circuit arrangement according to claim 2, **characterised in that**
- the sensor seating mat (PPD) has a first and a second backing film (PPD1, PPD2) kept apart from one another by spacers (9),
- a sensor element for recognising seat occupancy (R1, R2, R3) has two opposite conducting structures (3, 4), one of these being arranged on the first backing film (PPD1) and the second being arranged on the second backing film (PPD2), each conducting structure (3, 4) having electrical connections (31, 32, 41, 42) at both ends, and the two conducting structures (3, 4) being able to make electrical contact when a force is exerted on the backing films (PPD1, PPD2),
- the first connection (31) of the first conducting structure (3) is connected to the first measuring connection (C1) and the second connection (32) of the first conducting structure (3) is connected to the third measuring connection (C3) and
- the first connection (41) of the second conducting structure (4) is connected to the fourth measuring connection (C4) and the second connection (42) of the second conducting structure (4) is connected to the second measuring connection (C2).

## Revendications

1. Disposition de circuits destinée à la reconnaissance de l'occupation des sièges et à l'avertissement de ceinture dans un véhicule automobile comprenant des éléments de résistance sensibles au poids (R1, R2, R3, R_SBR_1, R_SBR_2) répartis de manière plane sur un siège de véhicule automobile (2),
- les éléments de résistance sensibles au poids (R1, R2, R3, R_SBR_1, R_SBR_2) présentant des premiers éléments de résistance destinés à la reconnaissance de l'occupation des sièges (R1, R2, R3) et des éléments de résistance supplémentaires destinés à l'avertissement de ceinture (R_SBR_1, R_SBR_2) et
- les premiers éléments de résistance (R1, R2, R3) étant respectivement montés en parallèle les uns avec les autres à l'intérieur d'un premier circuit de mesure entre une première connexion de mesure (C1) et une deuxième connexion de mesure (C2),
**caractérisée en ce qu'**un premier élément de résistance supplémentaire (R_SBR_1) est monté dans un deuxième circuit de mesure entre la première connexion de mesure (C1) et une troisième connexion de mesure (C3), et **en ce qu'**un deuxième élément de résistance supplémentaire (R_SBR_2) est monté dans un troisième circuit de mesure entre la deuxième connexion de mesure (C2) et une quatrième connexion de mesure (C4).

2. Disposition de circuits selon la revendication 1, **caractérisée en ce que** les premiers éléments de résistance (R1, R2, R3) en tant qu'éléments capteurs destinés à la reconnaissance de l'occupation des sièges et les éléments de résistance supplémentaires (R_SBR_1, R_SBR_2) en tant qu'éléments capteurs destinés à l'avertissement de ceinture, sont disposés sur un tapis de capteurs pour siège (PPD) commun destiné à la reconnaissance de l'occupation des sièges et à l'avertissement de ceinture dans un véhicule automobile.

3. Disposition de circuits selon l'une des revendications 1 ou 2, **caractérisée en ce qu'**une première résistance de diagnostic (R_D_1) est disposée en parallèle avec le premier élément de résistance supplémentaire (R_SBR_1) et qu'une deuxième résistance de diagnostic (R_D_2) est disposée en parallèle avec le deuxième élément de résistance supplémentaire (R_SBR_2).

4. Disposition de circuits selon la revendication 2, **caractérisée en ce que**
- le tapis de capteurs pour siège (PPD) présente une première et une deuxième feuille support (PPD1, PPD2), lesquelles sont maintenues à une distance donnée l'une de l'autre par des écarteurs (9),
- un élément capteur destiné à la reconnaissance de l'occupation des sièges (R1, R2, R3) présente deux structures conductrices (3, 4) situées en regard, l'une d'entre elles étant disposée sur la première feuille support (PPD1) et la deuxième sur la deuxième feuille support (PPD2), chaque structure conductrice (3, 4) présentant, aux deux extrémités, des connexions électriques (31, 32, 41, 42) et les deux structures conductrices (3, 4) pouvant être mises en contact électriquement par l'action d'une force exercée sur les feuilles supports (PPD1, PPD2),
- la première connexion (31) de la première structure conductrice (3) est reliée à la première connexion de mesure (C1) et la deuxième connexion (32) de la première structure conductrice (3) est reliée à la troisième connexion de mesure (C3) et
- la première connexion (41) de la deuxième structure conductrice (4) est reliée à la quatrième connexion de mesure (C4) et la deuxième connexion (42) de la deuxième structure conductrice (4) est reliée à la deuxième connexion de mesure (C2).
